# EUROPÄISCHE PATENTSCHRIFT

(11) **EP 1 641 895 B1**
(45) Veröffentlichungstag und Bekanntmachung des Hinweises auf die Patenterteilung: **24.06.2009**
(21) Anmeldenummer: 04740708.5
(22) Anmeldetag: 06.07.2004
(51) Int. Cl.: C09K 21/14, C04B 26/26, C04B 28/26, C04B 26/16

(54) **FEUERHEMMENDES BRANDSCHUTZELEMENT**
FLAME-RETARDING FIRE PROTECTION ELEMENT
ELEMENT COUPE-FEU IGNIFUGE

(30) Priorität: 06.07.2003 DE 10330555
(43) Veröffentlichungstag der Anmeldung: 05.04.2006
(73) Patentinhaber: Karl Zimmermann GmbH, 50769 Köln (DE)
(72) Erfinder: ZIMMERMANN, Karl, 51061 Köln (DE); VOLKMER, Lars, 53359 Rheinbach (DE)
(74) Vertreter: Grund, Martin
(86) Internationale Anmeldenummer: PCT/EP2004/007387
(87) Internationale Veröffentlichungsnummer: WO 2005/003254

(56) Entgegenhaltungen:
- EP-A- 0 400 402
- EP-A- 0 808 956
- EP-A- 1 127 908
- EP-B- 0 120 253
- DE-A- 19 639 842
- DE-A- 19 649 279
- DE-A- 19 652 352
- DE-A- 19 861 030
- DE-A- 19 910 342

## Beschreibung

Die Erfindung betrifft Brandschutzelemente bestehend aus (A) einer intumeszierenden Komponente, umfassend wenigstens ein Cyanursäurederivat, wenigstens ein Zuckerpolyol, wenigstens ein Ammoniumpolyphosphat, wenigstens einen Blähgraphit und Aluminiumhydroxid; und (B) einem verbundbildenden Träger (Basiswerkstoff), wobei die Komponente (A) homogen im verbundbildenden Träger (Basiswerkstoff) (B) verteilt ist, und wobei der verbundbildende Träger (B) ausgewählt ist aus der Gruppe, bestehend aus Polyurethanen, Phenolharzen, Polystyrolen, Polyolefinen, wie Polyethylen und/oder Polybutylen, Melaminharzen, Melaminharzschäumen, synthetischem oder natürlichem Kautschuk, Cellulose, Elastomeren und Gemischen davon, und wobei das Brandschutzelement in Form von Konstruktionselementen, Passtücken, Formkörpern, Zylindern (Stopfen), Platten, Quadern, Pyramiden, Halbschalen, Hohlkörpern, Verschlusselementen, Dichtungsprofilen und/oder Rohrisolationsschläuchen vorliegt.

Im Rahmen der vorliegenden Erfindung sind Brandschutzelemente solche Elemente, die bei Einwirkung von Feuer und/oder Hitze aufschäumen und dabei einen isolierenden, feuerabweisenden Karbonschaum ausbilden, der vom Feuer rückwärtige Bezirke von der Feuereinwirkung schützt.

Gegebenenfalls geschäumte Intumeszenzmassen auf Basis von Polyurethanen, die als Rezepturbestandteil eine Kombination aus Polyesterpolyolen, Cyanursäurederivaten und phosphorhaltigen Polyhydroxilverbindungen enthalten und plastisch-elastischen Charakter haben, sind aus der EP 0 051 106 bekannt. Durch Kombination dieser Intumeszenzmassen mit geschäumten oder massiven anorganischen oder organischen Zuschlagstoffen können Verbundwerkstoffe, beispielsweise Mehrschicht- bzw. Sandwichaufbauten, hergestellt werden.

Aus der EP 0 061 024 sind ebenfalls Intumeszenzmassen auf Polyurethanbasis bekannt, bei denen man anstelle der Polyester spezielle, mehr als bifunktionelle Polyether auf Basis von Alkylenoxid verwendet, deren durchschnittliche OH-Zahl zwischen 150 und 500 liegt.

Die EP 0 116 846 A1 bezieht sich auf wasserbeständige Konstruktionselemente und Beschichtungen mit Intumeszenzwirkung.

In der EP 0 116 846 A1 werden wasserbeständige Konstruktionselemente mit Intumeszenzeigenschaften für den vorbeugenden Brandschutz beschrieben, die auf Basis von Polyurethanen erhalten werden. Die Polyurethane werden durch Umsetzung von Polyisocyanaten, mindestens zwei Hydroxidgruppen aufweisenden phosphorhaltigen Kondensationsprodukten, Cyanursäure und/oder Cyanursäurederivate, beispielsweise Melamin, und in Gegenwart von Hilfs- und Zusatzstoffen hergestellt.

In der EP 0 120 253 A1 werden ebenfalls Intumeszenzmassen auf Basis von Polyurethanen beschrieben, bei denen man anstelle eines Cyanursäurederivats und des phosphorhaltigen Kondensationsproduktes leicht zugängliche und wenig wasserlösliche Phosphate vom Typ des Melaminphosphats verwendet.

In der EP 0 158 165 A1 werden poröse, harte Intumeszenzmassen auf Basis eines Diol/Isocyanat Zweikomponenten Systems beschrieben, das Melaminphosphat enthält.

In der EP 0 217 080 A1 werden Intumeszenzmassen auf Polyurethanbasis beschrieben, die als Füllstoffe Aluminiumhydroxide enthalten.

In der EP 0 400 402 A1 werden Brandschutzelemente auf der Basis von Schaumstoffen, bevorzugt Polyurethan, beschrieben die Blähgraphit, phosphorhaltige Polyole, Borate, Melaminsalze und/oder Ethylendiaminsalze enthalten.

In der EP 0 451 635 A1 werden sandwichartige Leichtformkörper beschrieben, deren Kernmaterial expandierten Blähgraphit enthält.

In der EP 0 492 248 A1 werden intumeszenzfähige Flächengebilde beschrieben, die zwischen zwei textilen, miteinander vemadelten oder vernähten Flächengebilden eine Schicht eines körnigen Intumeszenzmittels, zum Beispiel Blähgraphit, enthalten.

In der DE 196 49 279 A1 werden Flammschutzmittel für Polyurethane beschrieben, die roten Phosphor, Melamin und/oder Melaminderivate in einem Gewichtsverhältnis von 1 zu 7,5 bis 1 zu 100 enthalten.

Aus der DE 196 53 503 A1 ist ein intumeszierendes Material mit einer Thermoplasmatrix, einem Matrixstabilisator und intumeszierenden Bestandteilen, wie Blähgraphit, bekannt.

Aus der EP 1 127 908 ist ein Zweikomponenten-Ortsschaumsystem und dessen Verwendung zum Ausschäumen von Öffnungen zum Zweck des Brandschutzes bekannt

In der DE 198 60 339 A1 sind reaktive Zweikomponenten-Polyurethanschäummassen und ein Verfahren zur Brandschutzabdichtung bekannt.

In der DE 199 10 342 ist ein Verfahren zum Binden einer pulvrigen Substanz an einen tragenden Untergrund beschrieben. Die pulvrige Substanz kann Blähgraphit, Ammoniumpolyphosphat, Melamin, Pentaerythrit, Vermiculit, Wasserglas oder einen Substanz, die bei Wärmezufuhr Wasser freisetzt enthalten.

DE 198 61 030 beschreibt eine Pulverzusammensetzung zur Herstellung von wässrigen Überzugsmitteln, enthaltend Melaminharze, ein oder mehrwertige Alkohole, Phosphate oder Polyphosphate, und Chlorparaffine, Melamin, Melaminderivate und/oder Dicyanamid.

In der DE 196 39 842 sind brandgeschützte Wärmedämm-Verbundsysteme im Gebäudebau beschrieben, enthaltend Polystyrol-Schaumstoffplatten zwischen Gebäudeaußenwand und einer Putzschicht, wobei in den Fugen zwischen den Schaumstoffplatten Profile, Gitter oder Netze eingebracht sind, die mit einer intumeszierenden Masse getränkt, beschichtet oder auf andere Weise in Kontrakt gebracht sind.

EP 0 808 956 beschreibt hinterlüftete Fassaden, welche im Bereich der Hinterlüftung mit einer intumeszierenden Masse versehen sind. In Bespiel 4 wird eine Lüftungsvorrichtung in Form eines handelsüblichen Glasfasernetzes näher beschrieben, die mit einer intumeszierenden Masse imprägniert bzw. getränkt wurde.

Somit wurden bereits vielfach Versuche unternommen, geeignete brandschützende Systeme zur Verfügung zu stellen. Sämtliche im Stand der Technik formulierten Ansätze beschränken sich jedoch darauf, spezielle Anwendungen für einzelne (eingeschränkte, spezielle) Einsatzbereiche zu entwickeln. Sie konzentrieren sich auf die Modifikation einzelner Hauptbestandteile im grundlegend chemischen Sinne.

Von der Idee, ein intumeszierendes Brandschutzadditiv (A) zu entwickeln, welches dem Anwender erlaubt, seine Spezialprodukte (B), die sich z. B. durch Schalldämmung, Schwingungsdämpfung, Kälte- / Wärmeisolierung, Kälte- / Wärmeschutz, Wasserbeständigkeit, Feuchtebeständigkeit, dielektrische Eigenschaften, mechanischer Festigkeit etc. auszeichnen, lediglich durch Berücksichtigung des Additivs (A) bei der Rezepturformulierung höchsten brandschutztechnischen Anforderungen gerecht werden zu lassen, wurde nie berichtet. Eine brandschutztechnische Veredelung findet in diesem umfassenden und allgemein anwendbaren Sinne der Wirkstoffzumischung im Stand der Technik nicht statt.

Aufgabe der vorliegenden Erfindung ist es, sowohl im Markt bestehende als auch neue Anwendungen / Produkte, in denen momentan brandschutztechnische Anforderungen auf Grund scheinbar mangelnder Notwendigkeit oder fehlender technischer Möglichkeiten noch keine Verbreitung fanden, hinsichtlich ihrer Brandschutzeigenschaften zu optimieren bzw. zu kreieren.

Die Lösung der Aufgabe sind gebrauchsfertige Brandschutzelemente bestehend aus (A) einer intumeszierenden Komponente umfassend a) wenigstens ein Cyanursäurederivat, b) wenigstens ein Zuckerpolyol, c) wenigstens ein Ammoniumpolyphosphat, d) wenigstens einen Blähgraphit und e) Aluminiumhydroxid und (B) einen verbundbildenden Träger, wobei die Komponente (A) homogen im verbundbildenden Träger (B) verteilt ist, und wobei der verbundbildende Träger (B) ausgewählt ist aus der Gruppe, bestehend aus Polyurethanen, Phenolharzen, Polystyrolen, Polyolefinen, wie Polyethylen und/oder Polybutylen, Melaminharzen, Melaminharzschäumen, synthetischem oder natürlichem Kautschuk, Cellulose, Elastomeren und Gemischen davon, und wobei das Brandschutzelement in Form von Konstruktionselementen, Passtücken, Formkörpern, Zylindern (Stopfen), Platten, Quadern, Pyramiden, Halbschalen, Hohlkörpern, Verschlusselementen, Dichtungsprofilen und/oder Rohrisolationsschläuchen vorliegt.
Es zeigte sich überraschenderweise, dass die Brandschutzfunktion des funktionellen Trägermaterials (B), wie die stark anwendungseingrenzende Polyurethanbasis im Stand der Technik, wie in EP 0 400 402 A1, ersetzt werden kann durch den Zusatz von Pentaerythrit. Es entsteht ein in sich funktionstüchtiges Gemisch (A), welches für sich gesehen intumeziert und praktisch zur "Veredelung" unterschiedlichster Produkte oder Träger (B) eingesetzt werden kann.
Unter gebrauchfertigen "Brandschutzelementen" im Sinne dieser Erfindung werden alle Formteile / Körper verstanden, die geeignet sind beispielsweise in Gebäuden oder in anderen Anwendungen, bei der Brandschutzeigenschaften erforderlich sind, eingebaut zu werden.
Eine Einschränkung auf bestimmte Anwendungsbereiche / Produkte besteht nicht, da erfindungsgemäß eine Zumischung zu einer Vielzahl von marktgängigen oder neu zu kreierenden Produkten unterschiedlichster Einsatzbereiche besteht.
Das Einsatzgebiet umfasst somit den gesamten
- baulichen Brandschutz,
- Brandschutz in Industrieanlangen,
- Brandschutz im Schiffsbau,
- Brandschutz in der Automobilbranche,
- Brandschutz im Flugzeugbau,
- Brandschutz in der Raumfahrt,
- Brandschutz im Schienenverkehrswesen,
bevorzugt in Form von Konstruktionselementen, Passtücken, Formkörpern, Auskleidungen und Beschichtungen u. a. für / als / in Wänden, Decken und Sandwichelementen, Ummantelungen, Gehäusen, Abdichtungen,
Abschottungen, Isolierungen bzgl. Elektrizität, Hitze, Kälte, Schall und Schwingungen.

Durch den Einsatz der erfindungsgemäßen Wirkstoffmischung ist durch Intumeszenz von Bauteilen z.B. im Antriebsbereich wie Motoren oder Bauteile des Passagierbereichs wie Sitze, eine Erhöhung der passiven Sicherheit möglich. Speziell in der Automobilbranche, im Flugzeug-, Schiff- und Schienenverkehr kann die vorliegende Erfindung zum Einsatz kommen. Die Einsatzfähigkeit umfasst zusätzlich zu den bereits üblichen Brandschutzbereichen, auch Bereiche in denen momentan brandschutztechnische Anforderungen aufgrund (scheinbar) mangelnder Notwendigkeit oder fehlender technischer Möglichkeiten noch keine Verbreitung fanden.

Bevorzugt liegen die Brandschutzelemente in Form von Zylindern (Stopfen), Platten, Konstruktionselementen, Quadern, Pyramiden, Halbschalen, Hohlkörpern, Manschetten, Verschlusselementen, Bekleidungen, Ummantelungen, Dichtungsprofilen und/oder Rohrisolationsschläuchen vor.

Die intumeszierende Komponente (A) liegt bevorzugt pulverförmig vor. Insbesondere bevorzugt umfasst die intumeszierende Komponente (A) keine weiteren, das Brandschutzverhalten beeinflussenden Komponenten. Somit besteht die intumeszierende Komponente (A) bevorzugt aus den genannten Verbindungen. Erfindungsgemäß ist es auch bevorzugt, dass die intumeszierende Komponente (A) halogenfrei ist.

Unter a) Cyanursäurederivate im Rahmen der vorliegenden Erfindung ist Cyanursäure und/oder deren Derivate zu verstehen; dies sind Verbindungen, die sich von Cyanursäure oder Isocyansäure ableiten lassen. Solche sind z.B. Cyanamid, Dicyanamid, Dicyandiamid, Guanidin und dessen Salze, Biguanid, Melamincyanurat, Cyansäuresalze und Cyansäureester und -amide. Besonders bevorzugt ist Cyanursäureamid (Melamin).

Die Cyanursäure bzw. das Cyanursäurederivat hat in der intumeszierenden Komponente (A) die Funktion, als Gasbildner zu wirken und zersetzt sich im Brandfall zu nichtbrennbaren Gasen. Dies führt zu einem Aufblähen der entstehenden Kohlestrukturen, was zu Intumeszenz führt.

Technisch wird Melamin durch Erhitzen von Dicyanamid in flüssigem Ammoniak auf etwa 220°C bei 50 bis 60 bar gewonnen.

Unter b) Zuckerpolyolen im Rahmen der vorliegenden Erfindung sind Polyole zu verstehen, die durch Reduktion von vier bis sechswertigen Monosacchariden entstehen. Das wenigstens eine Zuckerpolyol ist bevorzugt ein 4- bis 6-wertiger Alkohol. Insbesondere bevorzugt hat das Zuckerpolyol 3 bis 8 Kohlenstoffatome und 4 bis 6 OH-Gruppen. Das wenigstens eine Zuckerpolyol ist bevorzugt ausgewählt aus der Gruppe, bestehend aus Threit, Erythrit, Pentaerythrit, Arabit, Aldonit, Xylit, Sorbit, Mannit, Dulcit, Formit, und Gemischen davon, insbesondere Pentaerythrit. Das Zuckerpolyol enthält somit bevorzugt außer C-, H- und O-Atomen keine weiteren Heteroatome, insbesondere ist kein phosphorhaltiges Zuckerpolyol enthalten.

Das Zuckerpolyol dient in der intumeszierenden Komponente (A) als Kohlenstofflieferant, wobei die OH-Gruppen im Brandfall mit Säuregruppen reagieren können.

Technisch wird Pentaerythrit aus Acetaldehyd und Formaldehyd in einer aldolartigen Addition zu Trimethylolacetaldehyd und nachfolgender Reduktion hergestellt.

Das wenigstens eine c) Ammoniumpolyphosphat im Rahmen der vorliegenden Erfindung ist das Ammoniumsalz der verschieden Polyphosporsäuren, beispielsweise die Metaphosphorsäure, die Orthophosphorsäure oder höher kondensiert Phosphorsäuren, die in der Regel als Gemisch vorliegen. Bevorzugt ist somit das wenigstens eine Ammoniumpolyphosphat ausgewählt aus der Gruppe, bestehend aus Ammoniummetaphosphorsäure, -orthophosphorsäure, Ammoniumsalzen von höher kondensierten Phosphorsäuren und Gemischen davon.

Das Ammoniumpolyphosphat dient in der intumeszierenden Komponente (A) als Säurelieferant, wobei im Brandfall Phosphorsäure entsteht, die mit dem Polyol einen Erster bilden kann und damit die Bildung eines Karbonschaums bewirkt.

Technisch wird Ammoniumpolyphosphat durch Erhitzen von Ammoniumphosphat hergestellt.

Als der wenigstens eine Blähgraphit d) kommen beispielsweise bekannte Einlagerungsverbindungen von Wasser, Schwefelsäure, Salpetersäure, Essigsäure, Lewissäuren und/oder sonstigen starken Säuren in Graphit in Frage. Diese werden auch als Graphitsalze bezeichnet. Bevorzugt sind erfindungsgemäß Blähgraphite, die bei Temperaturen von beispielsweise 100 bis 350°C unter Aufblähen charakteristische gasförmige Substanzen, wie SO₂, SO₃, CO₂, H₂O, NO, oder andere charakteristische gasförmige Substanzen, abgeben. Bevorzugt ist somit der Blähgraphit ausgewählt aus der Gruppe, betstehend aus unmodifiziertem Blähgraphit, Einlagerungsverbindungen von Wasser, Schwefelsäure, Salpetersäure, Essigsäure, Lewissäuren und/oder sonstigen starken Säuren in Graphit und Gemischen davon in Frage.

Der Blähgraphit kann beispielsweise in Form von Blättchen mit einem maximalen Durchmesser im Bereich von 0,01 bis 5 mm, bevorzugter 0,1 bis 5 mm, insbesondere 0,5 bis 3 mm und/oder 0,03 bis 3 mm vorliegen.

Der wenigstens eine Blähgraphit hat bevorzugt eine Korngröße im Bereich von wenigstens etwa 10 µm, bevorzugter von etwa 10 bis etwa 5000 µm, bevorzugter von etwa 10 µm bis etwa 2000 µm, insbeosondere etwa 10 bis etwa 1500 µm. Bevorzugt hat der Blähgraphit eine Korngrößenverteilung d₅₀ = 44 µm und/oder d_{17,5} < 300 µm und d_{82,5} größer/gleich 300 µm. Für die vorliegende Erfindung geeignete Blähgraphite sind im Handel erhältlich.

Der Blähgraphit hat in der intumeszierenden Komponente (A) den Zweck, als Krustenbildner und -stabilisator zu wirken. Durch mehr oder weniger starkes Aufblähen des Graphits entsteht eine lockere und gut isolierende bis dichte und hohe Stabilität verleihende Struktur. Dadurch ist Blähgraphit maßgeblich für die Brandschutzwirkung verantwortlich.

Aluminiumhydroxid im Rahmen der vorliegenden Erfindung kann synthetisch durch Fällen aus Aluminiumsalzlösung mit Ammoniak oder Alkalihydroxid und nachfolgendem Trocknen hergestellt werden. Aluminiumhydroxid ist auch als mineralisches Produkt (z.B. Tonerde) erhältlich.

Aluminiumhydroxid ist in der intumeszierenden Komponente (A) als Flammschutzmittel wirksam. Im Brandfall spaltet sich Wasser ab und entzieht der Umgebung Energie. Durch die Verdampfung des Wassers tritt eine Verdrängung des Sauerstoffs im Gasraum ein.

Insbesondere umfasst die intumeszierende Komponente (A) Melamin, Pentaerythrit, Amoniumpolyphosphat, Blähgraphit und Aluminiumhydroxid und besteht im einer besonders bevorzugten Ausführungsform daraus. Bevorzugt ist die Komponente (A) halogenfrei.

Die Verwendung einiger der reaktiven Komponenten allein gemäß der vorliegenden Erfindung in Intumeszenzmassen ist bekannt. Die erfindungsgemäße Kombination der reaktiven Komponenten zum universellen Einsatz im Träger (B) ist jedoch neu.

In der EP 0 120 253 B1 (Spalte 5, 2. Absatz) wird sogar ausdrücklich davon abgeraten, Ammoniumpolyphosphate in Intumeszenzmassen wegen einer zu geringen Schaumbildung zu verwenden. An gleicher Stelle wird auch von der Verwendung von reinem Melamin abgeraten, da es im Brandfall brennt und abtropft.

Es ist daher überraschend, dass die Komponente (A) ein günstigeres Brandverhalten bei homogener Verteilung im Träger aufweist und bei niederen Temperaturen durch Schaumbildung den erwünschten Brandschutz bildet.

Die Erfindung betrifft auch feuerhemmende Massen, enthaltend als intumeszierende Komponente Cyanursäurederivate, Zuckerpolyole, Ammoniumpolyphosphat, Blähgraphit und Aluminiumhydroxid und einen verbundbildenden Träger.

Erfindungsgemäß kann der Träger (B) verbundbildende anorganische Basismaterialien oder mineralische Feststoffe umfassen oder daraus bestehen, wie Kalk (Luftkalk, hydraulisch erhärtender Kalk), Zement, Gips, Silikate, Kalziumsilikate, Vermiculit, Anhydridbinder, Magnesiabinder, hydraulische Tragschichtbinder als Bindemittel und Zuschlagstoffe, wie mineralische Gesteine, Hochofenschlacke, Mineral- und Kunststoff- oder Stahlfasern, Betonzuschlagsmittel, Betonzusatzstoffe enthalten. Zusätzlich sind keramische Baustoffe und Glasbaustoffe sowie Modifikationen dieser und anderer Basismaterialien mit Additiven zur Steigerung der praktischen Einsatzfähigkeit bevorzugt.

Besonders bevorzugt kann der Träger (B) organische Basismaterialien oder polymere Kunststoffe umfassen oder daraus bestehen, wie Polyurethane, Phenolharze, Polystyrole, Polyolefine wie Polyethylen, Polybutylen, Harze wie Melaminharze und Melaminharzschäume, synthetischer oder natürlicher Kautschuk, Latex-, Acrylatdispersionen, Cellulose, Bitumen, Elastomere wie BR, NBR, SBR, EPDM, ABS und Gemische davon sowie Modifikationen dieser Basismaterialien mit Additiven zur Steigerung der praktischen Einsatzfähigkeit. Wenn der Träger (B) Kautschuk oder Elastomere umfasst, hat er bevorzugt die Form eines Schlauches, wie einem Rohrisolationsschlauch, oder eine andere Form, bei der der Träger bevorzugt biegsam ist.

Unter einer homogenen Verteilung der Komponente (A) im Träger (B) im Sinne der Erfindung wird eine annähernd gleichmäßige Verteilung der Komponente (A) im gesamten Volumen des Trägers (B) verstanden. So ist beispielsweise bevorzugt die Abweichung der Konzentration an Komponente (A) im Träger (B) pro 1 cm³ im Vergleich zu dem selben Volumen an anderer, bevorzugter an jeder anderen Stelle des Trägers ≤ (kleiner/gleich) 20%, bevorzugter ≤ (kleiner/gleich) 10%, bevorzugter ≤ (kleiner/gleich) 5%, insbesondere ≤ (kleiner/gleich) 1 %.

Bevorzugt umfasst das erfindungsgemäße Bauelement wenigstens 50 Gew.-%, bevorzugter wenigstens 70 Gew.-%, insbesondere wenigstens 90 Gew.-%, bevorzugter wenigstens 98 Gew.-% an Komponente (A) und Träger (B). Das erfindungsgemäße Bauelement kann auch zu 100% aus Träger (B) und Komponente (A) bestehen. Die gegebenenfalls vorhandenen zusätzlichen Komponenten sind bevorzugt lediglich Hilfsstoffe, wie z.B. nachstehend beschrieben.

Weitere Hilfsstoffe können beispielsweise handelsübliche Benetzungsmittel, Entschäumer, Konservierungsmittel, Lösungsmittel, Farbpigmente, Verdickungsmittel, Thixotropierungsmittel, Zellregulatoren, Zellstabilisatoren, Katalysatoren, Trocknungsmittel und/oder Treibmittel sein.

Des weiteren kann das erfindungsgemäße Brandschutzelement stabilisierende Zusätze enthalten, wie Fasern und Gewebe. Bevorzugt enthält das erfindungsgemäße Brandschutzelement, Glasfasergewebeeinlagen, Glas-, Kunststoff und/oder Metallfasern. Die stabilisierenden Zusätze sind bevorzugt thermostabil, d.h. deren Schmelzpunkt liegt bevorzugt oberhalb 80 °C. Besonders bevorzugt ist ein stabilisierender Zusatz, wie ein Gewebe oder Fasern, enthalten, wenn der Träger (B) ein polymeres Material, wie Polyuethan, umfasst.

Das Brandschutzelement umfasst bevorzugt etwa 10 bis etwa 98 Gew.-% , bevorzugter etwa 30 bis etwa 65 Gew.-% der intumeszierenden Komponente (A) und etwa 2 bis 90 Gew.-%, bevorzugter etwa 35 bis etwa 70 Gew.-% des verbundbildenden Trägers (B), bezogen auf das Gesamtgewicht des Brandschutzelements. Bevorzugt sind gegebenenfalls etwa 0 bis etwa 10 Gew.-% Hilfsstoffe, bezogen auf das Gesamtgewicht des Brandschutzelements, anwesend.

In einer bevorzugten Ausführungsform A umfasst das Brandschutzelement etwa:

**Tabelle 1: Ausführungsform A**

| Bestandteil | Zusammensetzung Bezogen auf Komponente A |
|---|---|
| Cyanursäurederivat | 5 bis 90 Gew.-% |
| Zuckerpolyol | 5 bis 90 Gew.-% |
| Ammoniumpolyphosphat | 5 bis 90 Gew.-% |
| Blähgraphit | 5 bis 90 Gew.-% |
| Aluminiumhydroxid | 5 bis 90 Gew.-% |

In einer weiteren bevorzugten Ausführungsform B umfasst das Brandschutzelement etwa:

**Tabelle 2: Ausführungsform B**

| Bestandteil | Zusammensetzung Bezogen auf Komponente A |
|---|---|
| Cyanursäurederivat | 5 bis 20 Gew.-% |
| Zuckerpolyol | 5 bis 20 Gew.-% |
| Ammoniumpolyphosphat | 15 bis 45 Gew.-% |
| Blähgraphit | 15 bis 45 Gew.-% |
| Aluminiumhydroxid | 10 bis 25 Gew.-% |

In noch einer weiteren Ausführungsform C umfasst das Brandschutzelement etwa:

**Tabelle 3: Ausführungsform C**

| Bestandteil | Zusammensetzung Bezogen auf Brandschutzelement |
|---|---|
| Cyanursäurederivat | 0,025 bis 30 Gew.-% |
| Zuckerpolyol | 0,025 bis 40 Gew.-% |
| Ammoniumpolyphosphat | 0,025 bis 35 Gew.-% |
| Blähgraphit | 0,025 bis 50 Gew.-% |
| Aluminiumhydroxid | 0,025 bis 30 Gew.-% |
| Verbundbildender Träger | 5 bis 95 Gew.-% |

Die feuerhemmenden Massen sind bevorzugt, wie in Bezug auf die Brandschutzelemente beschrieben. Bevorzugt umfassen 1 bis 20 Gew.-Teile Cyanursäurederivate, 1 bis 40 Gew.-Teile Zuckerpolyole, 2 bis 35 Gew.-Teile Ammoniumpolyphosphat, 3 bis 20 Gew.-Teile Blähgraphit, 2 bis 20 Gew.-Teile Aluminiumhydroxid und 2 bis 90 Gew.-Teile des verbundbildenden Trägers.

Die erfindungsgemäßen Bauelemente können beispielsweise hergestellt werden, indem die intumeszierende Komponente (A) als Gemisch oder deren einzelne Komponenten Cyanursäurederivate, Zuckerpolyole, Ammoniumpolyphosphat, Blähgraphit und Aluminiumhydroxid mit dem Träger (B) homogen gemischt werden. Die Komponente (A) wird bevorzugt pulverförmig dem Träger (B) zugegeben, d.h. ohne Lösungsmittel, insbesondere ohne Wasser. Sodann werden aus dem erhaltenen Gemisch die gewünschten Bauelemente hergestellt.

Wenn der Träger (B) beispielsweise ein Polyurethan ist, dann können die Ausgangskomponenten des Polyurethans, nämlich ein mehrwertiger Akohol, wie ein Diol, und ein Isocyanat mit der Komponente (A) homogen vermischt werden und sodann die Ausgangskomponenten ausreagiert werden, wodurch ein erfindungsgemäßes Brandschutzelement in der gewünschten Form erhalten wird.

Wenn der Träger ein extrudierfähiges Material, wie Kautschuk ist, dann können der Träger und die Komponente (A) homogen gemischt werden und sodann diese Gemisch in die gewünschte Form extrudiert und gegebenenfalls vulkanisiert werden, wodurch ein erfindungsgemäßes Brandschutzelement erhalten wird.

Wenn der Träger Vermiculit oder ähnliches ist, dann kann der Träger und die Komponente (A) homogen gemischt werden und sodann unter Zugabe von Wasserglaskleber und weiteren Hilfsstoffen z.B. Härter in die gewünschte Form eingebracht werden, wodurch nach entsprechender Aushärtung ein erfindungsgemäßes Brandschutzelement erhalten wird.

Die Brandschutzelemente können allgemein durch Verpressen oder Formgießen und Gelieren, durch Schneiden oder Schmelzen zu Formkörpern geformt werden. Diese schäumen im Brandfall auf und so wird eine Flammenausbreitung verhindert. Die Brandschutzelemente sind also Formkörper, die als Dichtelemente, Sicherungsvorrichtungen, Brandsperren, Verkleidungen geeignet sind. Man kann diese somit als Verfugungen, Verschlüsse für Kabeldurchbrüche, zum Verschließen von Maueröffnungen verwenden.

Von Interesse ist auch die Herstellung von Brandschutzelementen in Form von Polstern und Polsterbelägen. Ebenfalls ist von Interesse die Herstellung von Platten und Konstruktionselementen nahezu beliebiger Dicke auf z. B. Metall, Stahlträgern und Blechen, Holz, z.B. Türblättern, Dachbalken, auf Mauerwerk, auf Kunststoffen, seien es Kabelisolierungen oder Schaumstoffplatten.

Wenn man ein erfindungsgemäßes Brandschutzelement auf Metallplatten, eine Wabenplatte aus Metall, Pappe, Papier, Holz, Keramik oder Kunststoff aufbringt bzw. in die Waben einer solchen Wabenplatte einbringt, dann können leicht feuerhemmende Platten, Konstruktions-, Wand- oder Deckenelemente hergestellt werden.

Die Brandschutzelemente können auch in Form von Antidröhnbelägen oder Schallschutzelementen sowie für Zwecke der Energieabsorption hergestellt werden.

Auch die Verwendung eines Brandschutzelements als Innenbeschichtung von feuerhemmenden Türen, die im Brandfall aufschäumt und isolierend wirkt, ist in Betracht zu ziehen, desgleichen die Herstellung von Tür- oder sonstigen Dichtungen, die im Brandfall aufschäumen und den vorgelagerten Schlitz abdichten. Man kann auch Dichtprofile, z.B. aus elastischem Material, mit den erfindungsgemäßen Intumeszenzmassen füllen oder hinterfüllen oder als solches herstellen und so Brandschutz erzielen. Durch geeignete Anordnungen kann man in Kaminen, Lüftungs- und Klimaanlagen, Förderanlagen, Rohrleitungen und Ein-/Austrittsöffnungen Sperren aufbauen, die im Fall einer Erhitzung den weiteren Durchtritt von Gasen bremsen oder verhindern.

Solche Anordnungen sind z.B. Stapel von in geringen Abständen parallel liegenden Platten, Sieben und Lochblenden oder mit Granulaten der Brandschutzelemente locker gefüllte Rohrabschnitte, bzw. Rohre und Innenbeschichtungen aus den erfindungsgemäßen Intumeszenzmassen. Die ggf. geschäumten Intumeszenzmassen können auch als Filterelemente für Gase eingesetzt werden, die sich bei zu großer Temperaturerhöhung verschließen.

Bevorzugt ist die Verwendung der erfindungsgemäßen Intumeszenzmassen zur Herstellung von Formkörpern, die zum Verschluss von Maueröffnungen, z.B. als Abschottungen, eingesetzt werden.

Das erfindungsgemäße Brandschutzelement kann auch in einem feuerhemmenden Bauteil mit wenigstens einer daran angeordneten Deckschicht anwesend sein. Die Deckschicht kann aus einem Material gebildet sein, ausgewählt aus der Gruppe, bestehend aus Metallen, Mineralwolle, Foamglas, Calciumsilikat, Gips, Gipsverbundwerkstoffen, Holz, Holzverbundwerkstoffen, Polyvinylchlorid, Polyolefin, Glasfasergewebe, Tapeten, Keramikwerkstoffen und Gemischen davon. Bevorzugt ist das feuerhemmende Bauteil sandwichartig aufgebaut. Dabei kann wenigstens eine Deckschicht am Bauteil außen angeordnet und das Kernmaterial ein erfindungsgemäßes Brandschutzelement sein.

Die Erfindung hat somit den Vorteil, dass mit einem intumsezierendes Brandschutzadditiv (A), welches dem Anwender erlaubt seine Träger (Spezialprodukte) (B), die sich z.B. durch Schalldämmung, Schwingungsdämpfung, Kälte- / Wärmeisolierung, Kälte- / Wärmeschutz, Wasserbeständigkeit, Feuchtebeständigkeit, dielektrische Eigenschaften, mechanischer Festigkeit etc. auszeichnen, lediglich durch Einverleiben des Additivs (A) bei der Rezepturformulierung ein erfindungsgemäßes Brandschutzelement erhalten wird, das höchsten brandschutztechnischen Anforderungen gerecht wird.

Die Erfindung wird nachstehend anhand einiger Beispiele näher erläutert. (Zusammensetzung der intumeszierenden Komponente in Abhängigkeit des Einsatzproduktes)

### Brandschutzelement Beispiel 1

In folgendem Beispiel wird Bitumen als verbundbildender Träger (B) verwendet. Die Komponente (A) wurde in den in der Tabelle angegebenen Mengen mit den dort angegebenen Mengen an Träger (B) homogen gemischt und in eine Form verfüllt, wodurch nach entsprechender Trocknung ein erfindungsgemäßes Brandschutzelement erhalten wird.

| | Bestandteile Brandschutzelement Bsp. 1 | Gew.-% |
|---|---|---|
| Komponente (A) | Ammoniumpolyphosphat | 14,6 |
| | Pentaerythrit | 13,8 |
| | Melamin | 4,6 |
| | Aluminiumhydroxid | 6,5 |
| | Blähgraphit | 10,5 |
| Komponente (B) | handelsüblicher Bitumen | 50,0 |

Brandschutzelemente aus Beispiel 1 und Elemente aus handelsüblichem Bitumen werden mit dem Bunsenbrenner zwei Minuten beflammt. Es zeigt sich hierbei das folgende Ergebnis:

| | | | |
|---|---|---|---|
| | Kriterien | Brandschutzelement nach Beispiel 1 | Element aus handelsüblichem Bitumen |
| Probekörper | Schichtdicke: | 5 mm | 5 mm |
| | Dichte: | 0,15 g/cm³ | 0,15 g/cm³ |
| Karbonschaum | Aufschäumhöhe: | 35 mm | nicht vorhanden |
| Beobachtung | | Bei Kontakt mit der Flamme, intumesziert die Masse stark und es bildet sich keine Flamme Kein Nachbrennen Restdicke des Brandschutzelementes 4 mm | bei Kontakt mit der Flamme fängt die Masse sofort an zu brennen Die Masse brennt auch ohne Energie-zufuhr weiter Es zeigt sich keine Intumeszenz Bitumenelement ist vollständig verbrannt |

### Brandschutzelement Beispiel 2

In folgendem Beispiel wird Vermiculit als verbundbildender Träger (B) verwendet. Die Komponente (A) wurde in den in der Tabelle angegebenen Mengen mit den dort angegebenen Mengen an Träger (B) homogen gemischt, in eine Form verfüllt. Wodurch nach entsprechender Trocknung ein erfindungsgemäßes Brandschutzelement erhalten wird.

| | Bestandteile Brandschutzelement Bsp. 2 | Gew.-% |
|---|---|---|
| Komponente (A) | Ammoniumpolyphosphat | 14,6 |
| | Pentaerythrit | 13,8 |
| | Melanin | 4,6 |
| | Aluminiumhydroxid | 6,5 |
| | Blähgraphit | 10,5 |
| Komponente (B) | handelsüblicher Vermiculit, | 50,0 |
| | Wasserglaskleber und Härter | |

Brandschutzelemente aus Beispiel 2 und Elemente aus handelsüblichem Vermiculit werden mit dem Bunsenbrenner zwei Minuten beflammt. Es zeigt sich hierbei das folgende Ergebnis:

| | | | |
|---|---|---|---|
| | Kriterien | Brandschutzelement nach Beispiel 2 | Element aus handelsüblichem Vermiculit |
| Probekörper | Schichtdicke: | 15 mm | 15 mm |
| Karbonschaum | Aufschäumhöhe: | 5 mm | nicht vorhanden |
| Beobachtung | | Bei Kontakt mit der Flamme intumesziert die Masse es bildet sich keine Flamme Restdicke des Brandschutzelementes 8mm | Es zeigt sich keine Intumeszenz Vermiculitelement ist spröde / pulverisiert |

### Brandschutzelement Beispiel 3

In folgendem Beispiel wird Polyurethan als verbundbildender Träger (B) verwendet. Die Herstellung des Brandschutzelements nach Beispiel 3 erfolgt mit einer Zwei-Komponenten-Niederdruckschäummschine. Dabei ist Komponente 1 üblicherweise das Polyol mit diversen Verschäumungshilfsmitteln und die Komponente 2 das Isocyanat. Die intumeszierenden Stoffe (A) werden gleichmäßig mit Hilfe eines herkömmlichen Rührorgans vor der PU-Verschäumung in die Komponente 1 (Polyol) eindosiert. Die Verfahren zur Polyurethanverschäumung sind in der Literatur hinreichend beschrieben.

Nach der Verschäumung steht das auf Basis des Polyurethans hergestellte Brandschutzelement in Form eines z.B. quaderförmigen Block's zur Verfügung und kann in Form von konfektionierten Passstücken z.B. in Kabelabschottungen oder als Dichtungsmaterial in Türen etc. ohne weitere Maßnahmen Beschichtungen o.ä. zum Einsatz kommen.

| | Bestandteile Brandschutzelement Bsp. 3 | Gew.-% |
|---|---|---|
| Komponente (A) | Ammoniumpolyphosphat | 14,0 |
| | Pentaerythrit | 5,0 |
| | Melamin | 5,0 |
| | Aluminiumhydroxid | 6,5 |
| | Blähgraphit | 13,3 |
| Komponente (B) | Handelsübliches Polyol | 35,7 |
| | Handelsübliches Isocyanat | 19,0 |
| | Handelsübliche Hilfsstoffe | 1,5 |

Brandschutzelemente aus Beispiel 3 und Elemente aus handelsüblichem Polyurethan werden in einem Laborbrandofen mittels Gasflamme 45 Minuten beflammt. Es zeigt sich hierbei das folgende Ergebnis:

| | | | |
|---|---|---|---|
| | Kriterien | Brandschutzelement nach Beispiel 3 | Element aus handelsüblichem Polyurethan |
| Probekörper | Abmessung: | 64 x 64 x 40 mm | 64 x 64 x 40 mm |
| | Dichte: | 244 g / dm³ | 244 g / dm³ |
| Karbonschaum | Aufschäumhöhe: | 35 mm | 0 mm |
| Beobachtung | | Bei Kontakt mit der Flamme starke, Intumeszenz Kein Nachbrennen Kein Durchbrand Restdicke des Brandschutzelementes 20 mm Temperatur nach 45 Minuten 249 °C | bei Kontakt mit der Flamme fängt das Element sofort an zu brennen Die Masse brennt auch ohne Energie-zufuhr weiter Es zeigt sich keine Intumeszenz PU ist vollständig verbrannt Temperatur nach 45 Minuten 400 °C |

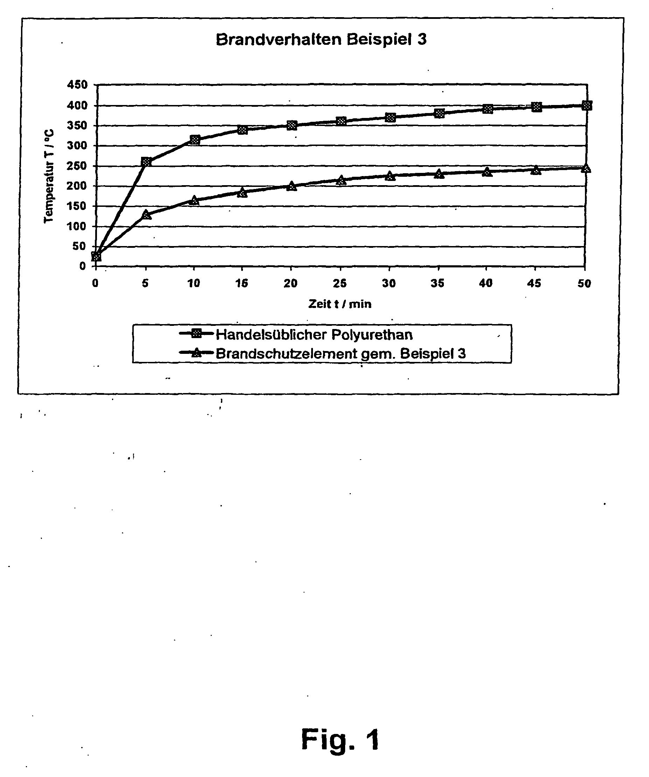

Figur 1 zeigt den Temperaturverlauf des Probekörper im Vergleich zu einem Brandschutzelement nach Beispiel 3 in einem Laborbrandofen. Figur 1 zeigt durch die enorme Temperaturdifferenz, dass mit Brandschutzelement durch Zusatz der erfindungsgemäßen Rezeptur gemäß Beispiel 3 eine deutliche Brandschutzsteigerung im Vergleich zu handelsüblichen Polyurethanschäumen erreicht wird.

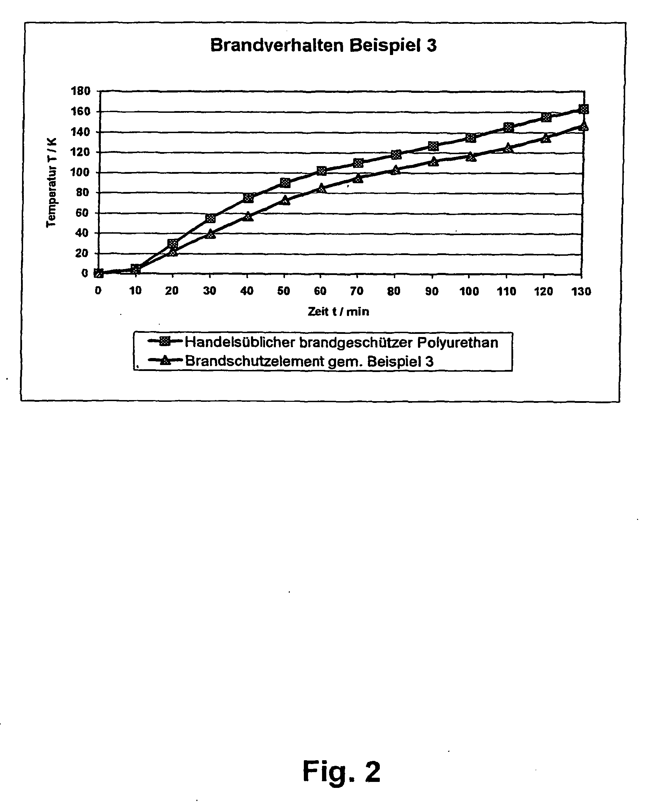

Figur 2 zeigt den Temperaturverlauf einer Kabelabschottung gemäß Beispiel 3 im Vergleich zu einem Probekörper gemäß dem Brandversuch an der Materialprüfungsanstalt Braunschweig nach DIN 4102-Teil 9. Der Vergleichskörper besteht aus 31,9 % Polyetherpolyol, 19,2 % Phosphorhaltiges Polyol, 10,7 % Melaminphosphat, 5,2 % Melamin, 4,7 % ATH, 0,65 % Eisenoxid, 27,65 % Isocyanat (MDI).

Ein bei der Materialprüfanstalt Braunschweig nach DIN 4102-9 durchgeführter Brandversuch belegte die dargestellten Ergebnisse. Figur 2 zeigt durch die enorme Temperaturdifferenz, dass mit Brandschutzelement durch Zusatz der erfindungsgemäßen Rezeptur gemäß Beispiel 3 eine deutliche Brandschutzsteigerung im Vergleich zu handelsüblichen zugelassenen Kabelabschottungssystemen aus Polyurethanschäumen erreicht wird.

### Brandschutzelement Beispiel 4

In folgendem Beispiel wird Kautschuk als verbundbildender Träger (B) verwendet.

Die Herstellung des Brandschutzelements nach Beispiel 4 wird nach der üblichen Vorgehensweise, die hinreichend in der Literatur beschrieben ist, durchgeführt. In Spezialknetern werden dem Kautschuk sämtliche Zusatzstoffe einschließlich der Komponente (A) zugefügt und teilhomogenisiert. Ein anschließender Walzvorgang dient der abschließenden Homogenisierung. Durch Extrusion können unterschiedliche Geometrien der Produkte erzeugt werden. Zur Vulkanisation werden die Produkte auf ca. 150 °C erhitzt.

| | Bestandteile Brandschutzelement Bsp. 4 | Gew.-% |
|---|---|---|
| Komponente (A) | Ammoniumpolyphosphat | 14,6 |
| | Pentaerythrit | 13,8 |
| | Melamin | 4,6 |
| | Aluminiumhydroxid | 6,5 |
| | Blähgraphit | 10,5 |
| Komponente (B) | Handelsüblicher Kautschuk mit Zuschlägen | 50,0 |
| | & Hilfsstoffen | |

Brandschutzelemente aus Beispiel 4 und Elemente aus handelsüblichem Kautschuk werden in einem Laborbrandofen mittels Gasflamme 45 Minuten beflammt. Es zeigt sich hierbei das folgende Ergebnis:

| | | | |
|---|---|---|---|
| | Kriterien | Brandschutzelement nach Beispiel 4 | Element aus handelsüblichem Kautschuk |
| Probekörper | Abmessung: | 64 x 64 x 40 mm | 64 x 64 x 40 mm |
| | Dichte: | 400 g / dm³ | 350 g / dm³ |
| Karbonschaum | Aufschäumhöhe: | 15 mm | 0 mm |
| Beobachtung | | Bei Kontakt mit der Flamme, Intumeszenz Kein Nachbrennen Kein Durchbrand Restdicke des Brandschutzelementes 20 mm Temperatur nach 45 Minuten 255 °C | bei Kontakt mit der Flamme fängt das Element sofort an zu brennen Die Masse brennt auch ohne Energie-zufuhr weiter Es zeigt sich keine Intumeszenz Kautschuk ist vollständig verbrannt Temperatur nach 45 Minuten 305 °C |

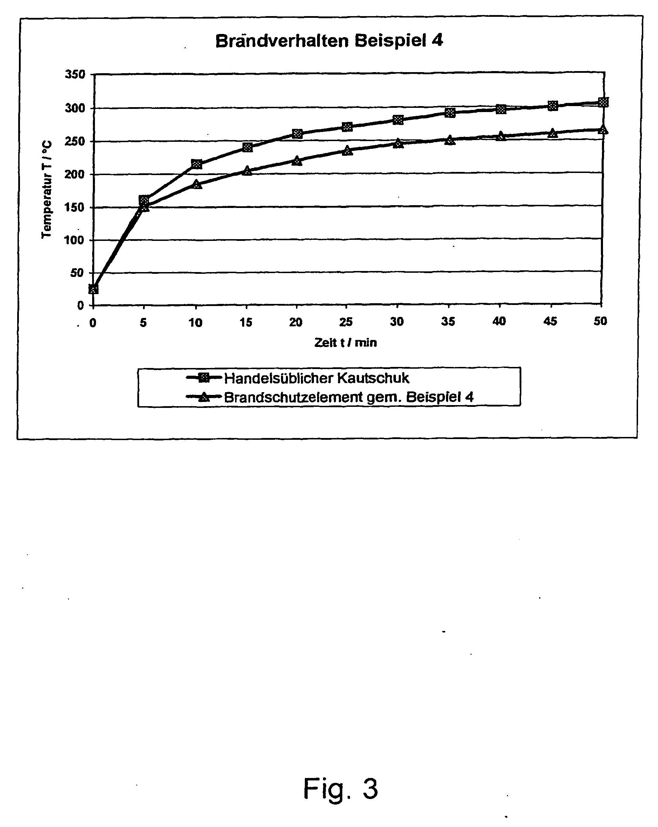

Figur 3 zeigt den Temperaturverlauf des Probekörper im Vergleich zu einem Brandschutzelement nach Beispiel 4 in einem Laborbrandofen.

Figur 3 zeigt durch die enorme Temperaturdifferenz, dass mit Brandschutzelement durch Zusatz der erfindungsgemäßen Rezeptur gemäß Beispiel 4 eine deutliche Brandschutzsteigerung im Vergleich zu handelsüblichen Kautschuken erreicht wird.

Die Beispiele 1 bis 4 zeigen deutlich, dass eine Steigerung der Brandschutzeigenschaften mit Hilfe der erfindungsgemäßen Rezeptur (A) gegenüber dem aktuellen Stand der Technik erreicht werden kann und die erfindungsgemäße Rezeptur universell in (B) eingesetzt werden kann.

## Patentansprüche

1. Brandschutzelement, bestehend aus
(A) einer intumeszierenden Komponente, umfassend
a) wenigstens ein Cyanursäurederivat,
b) wenigstens ein Zuckerpolyol,
c) wenigstens ein Ammonlumpolyphosphat,
d) wenigstens einen Blähgraphit und
e) Aluminiumhydroxid; und
(B) einem verbundbildenden Träger,
wobei die Komponente (A) homogen im verbundbildenden Träger (B) verteilt ist,
und wobei der verbundbildende Träger (B) ausgewählt ist aus der Gruppe, bestehend aus Polyurethanen, Phenolharzen, Polystyrolen, Polyolefinen, wie Polyethylen und/oder Polybutylen, Melaminharzen, Melaminharzschäumen, synthetischem oder natürlichem Kautschuk, Cellulose, Elastomeren und Gemischen davon,
und wobei das Brandschutzelement in Form von Konstruktionselementen, Passtücken, Formkörpern, Zylindern (Stopfen), Platten, Quadern, Pyramiden, Halbschalen, Hohlkörpern, Verschlusselementen, Dichtungsprofilen und/oder Rohrisolationsschläuchen vorliegt.

2. Brandschutzelement nach Anspruch 1, **dadurch gekennzeichnet, dass** die intumeszierende Komponente (A) pulverförmig mit dem verbundbildenden Träger gemischt ist.

3. Brandschutzelement nach einem der vorstehenden Ansprüche, **dadurch gekennzeichnet, dass** die intumeszierende Komponente (A) halogenfrei ist.

4. Brandschutzelement nach einem der vorstehenden Ansprüche, wobei die Komponente (A) aus wenigstens einem Cyanursäurederivat, wenigstens einem Zuckerpolyol, wenigstens einem Ammoniumpolyphosphat, wenigstens einem Blähgraphit und Aluminiumhydroxid besteht.

5. Brandschutzelement nach einem der vorstehenden Ansprüche, wobei das wenigstens eine Cyanursäurederivat ausgewählt ist aus der Gruppe, bestehend aus Cyanamid, Dicyanamid, Dicyandiamid, Guanidin und dessen Salzen, Biguanidin, Melamincyanurat, Cyanursäuresalze, -ester, -amide und Gemische davon, insbesondere Cyanursäureamid (Melamin).

6. Brandschutzelement nach einem der vorstehenden Ansprüche, wobei das wenigstens eine Zuckerpolyol ein 4- bis 8-wertiger Alkohol ist.

7. Brandschutzelement nach Anspruch 6, wobei das wenigstens eine Zuckerpolyol ausgewählt ist aus der Gruppe, bestehend aus Threit, Erythrit, Pentaerythrit, Arabit, Aldonit, Xylit, Sorbit, Mannit, Dulcit, Formit, und Gemischen davon, insbesondere Pentaerythrit.

8. Brandschutzelement nach einem der vorstehenden Ansprüche, wobei das wenigstens eine Ammoniumpolyphosphat ausgewählt ist aus der Gruppe, bestehend aus Ammonium-metaphosphorsäure, -orthophosphorsäure, Ammoniumsalzen von höher kondensierten Phosphorsäuren und Gemischen davon.

9. Brandschutzelement nach einem der vorstehenden Ansprüche, wobei der wenigstens eine Blähgraphit ausgewählt ist aus der Gruppe, bestehend aus unmodifiziertem Blähgraphit, Einlagerungsverbindungen von Wasser, Schwefelsäure, Salpetersäure, Essigsäure, Lewissäuren und/oder sonstigen starken Säuren in Graphit und Gemischen davon.

10. Brandschutzelement nach einem der vorstehenden Ansprüche, wobei der wenigstens eine Blähgraphit eine Korngrößenvertellung von etwa 10 bis etwa 5000 µm hat.

11. Brandschtuzelement nach einem der vorslehenden Ansprüche, wobei weitere Hilfsstoffe anwesend sind, wie Benetzungsmittel, Entschäumer, Konservierungemittel, Lösungsmittel, Farbpigmente, Verdickungsmittel, Thixotropierungsmittel, Zellregulatoren, Zellstabillsatoren, Katalysatoren, Trocknungsmittel und/oder Treibmittel.

12. Brandschutzelement nach einem der vorstehenden Ansprüche, wobei etwa 10 bis etwa 98 Gew.-% der Intumeszlerenden Komponente (A) und etwa 2 bis 99 Gew.-% des verbundbildenden Trägers (B), bezogen auf das Gesamtgewicht des Brandschutzelements, anwesend sind.

13. Brandschutzelement nach Anspruch 12, wobei etwa 30 bis etwa 65 Gew.-% der Inlumeszlerenden Komponente (A) und etwa 35 bis etwa 70 Gew.-% des verbundbildenden Trägers (B), bezogen auf das Gesamtgewicht des Brandschutzelements, anwesend sind.

14. Brandschutzelement nach einem der Ansprüche 12 bis 13, wobei etwa 0 bis etwa 20 Gew.-% Hilfsstoffe, bezogen auf das Gesamtgewicht des Brandschutzelements, anwesend sind.

15. Brandschutzelement nach einem der vorstehenden Ansprüche, wobei etwa 5 bis etwa 90 Gew.-% des wenigstens einen Cyanursäurederivats, etwa 5 bis etwa 90 Gew.-% des wenigstens einen Zuckerpolyols, etwa 6 bis etwa 90 Gew.-% des wenigstens einen Ammonlumpolyphosphats, etwa 5 bis etwa 90 Gew.-% des wenigstens einen Blähgraphits und etwa 5 bis etwa 90 Gew.-% des Aluminiumhydroxid, bezogen auf das Gesamtgewicht der Komponente (A), anwesend sind.

16. Brandschutzelement nach Anspruch 15, wobei etwa 5 bis etwa 20 Gew.-% des wenigstens einen Cyanursäurederivats, etwa 5 bis etwa 20 Gew.-% des wenigstens einen Zuckerpolyols, etwa 15 bis etwa 45 Gew.-% des wenigstens einen Ammoniumpolyphosphats, etwa 15 bis etwa 45 Gew.-% des wenigstens einen Blähgraphits und etwa 10 bis etwa 25 Gew.-% des Aluminiumhydroxid, bezogen auf das Gesamtgewicht der Komponente (A), anwesend sind.

17. Brandschutzelement nach einem der vorstehenden Ansprüche, wobei etwa 0.025 bis etwa 30 Gew.-Teile des wenigstens einen Cyanursäurederivats, etwa 0,025 bis etwa 40 Gew.-% des wenigstens einen Zuckerpolyols, etwa 0,025 bis etwa 35 Gew.-% des wenigstens einen Ammoniumpolyphosphates, etwa 0,025 bis etwa 50 Gew.-% des wenigstens einen Blähgraphits, etwa 0,025 bis etwa 30 Gew.-% des Aluminimuhydroxids und etwa 5 bis etwa 95 Gew.-% des verbundbildenden Trägers anwesend sind.

18. Feuerhemmendes Bauteil umfassend ein Brandschutzelement nach einem der Ansprüche 1 bis 17 mit wenigstens einer daran angeordneten Deckschicht.

19. Feuerhemmendes Bauteil nach Anspruch 18, wobei die Deckschicht aus einem Material gebildet ist, ausgewählt aus der Gruppe, bestehend aus Metallen, Mineralwolle, Foamglas, Calciumsilikat, Gips, Gipsverbundwerkstoffen, Holz, Holzverbundwerkstoffen, Polyvinylchlorid, Polyolefin, Glasfaser-, Kunststofffaser-Metallfasergewebe, Tapeten, Keramikwerkstoffen und Gemischen davon.

20. Feuerhemmendes Bauteil nach einem der Ansprüche 18 oder 19, wobei das Bauteil sandwichartig aufgebaut ist.

21. Feuerhemmendes Bauteil nach einem der Ansprüche 18 bis 20, wobei die wenigstens eine Deckschicht am Bauteil außen angeordnet ist und das Kernmaterial ein Brandschutzelement nach einem der Ansprüche 1 bis 17 ist.

22. Verfahren zur Herstellung eines Brandschutzelements nach einem der Ansprüche 1 bis 17, die Schritte umfassend
a) Bereitstellen eines Ausgangsmaterials eines verbundbildenden Trägers (B);
b) Bereitstellen einer intumeszierenden Komponente (A) von wenigstens einem Cyanursäurederivat, wenigstens einem Zuckerpolyol, wenigstens einem Ammoniumpolyphosphat, wenigstens einem Blähgraphit und Aluminiumhydroxid, einzeln oder als Gemisch;
c) Homogenes Mischen der einzelnen Bestandteile der Komponente (A) separat und/oder das Gemisches aus den Bestandteilen der Komponente (A) und des Ausgangsmaterials des verbundbildenden Träger (B);
d) Herstellen eines Formteils aus dem in Schritt c) erhaltenen homogenen Gemisch.

## Claims

1. A fire protection element consisting of:
(A) an intumescent component, composing
a) at least one derivate of cyanuric acid,
b) at least one sugar polyol,
c) at least one ammonium polyphosphate,
d) at least one expandable graphite and
e) aluminum hydroxide; and
(B) a compound forming carrier,
wherein component (A) is distributed homogeneously within the compound forming carrier (B),
and wherein the compound forming carrier (B) is selected from the group consisting of polyurethanes, phenolic resins, polystyrenes, polyolefins, such as polyethylene and/or polybutylene, melamin resins, melamin resin foams, synthetic or natural rubber, cellulose, elastomers and mixtures thereof,
and wherein the fire protection element is present in die form of construction elements, fitting parts, molded paddings, cylinders (plugs), plates, ashlars, pyramids, half shells, hollow containers, closing devices, sealing profiles and/or isolating tubing for pipes.

2. The fire protection element according to claim 1, **characterized in that** the intumescent component (A) is mixed in powder form with the compound forming carrier.

3. The fire protection element according to any of the preceding claims, **characterized in that** the intumescent component (A) is free of halogens.

4. The fire protection element according to any of the preceding claims, wherein component (A) consists of at least one derivate of cyanuric acid, at least one sugar polyol, at least one ammonium polyphosphate, at least one expandable graphite and aluminum hydroxide.

5. The fire protection element according to any of the preceding claims, wherein the at least one derivate of cyanuric acid is selected from the group consisting of cyanamide, dicyanamide, dicyandiamide, guanidine and its salts, biguanidine, melamine cyanurate, salts of cyanuric acid, -esters, -amides and mixtuxes thereof, in particular the amide of cyanuric acid (melamine).

6. The fire protection element according to any of the preceding claims, wherein the at least one sugar polyol is a 4- to 8-valent alcohol.

7. The fire protection element according to claim 6, wherein the at least one sugar polyol is selected from the group consisting of threite, erythritol, penta-erythritol, arabic, aldonite, xylite, sorbitol, mannite, dulcit, formit and mixtures thereof, in particular penta-erythritol.

8. The fire protection element according to any of the preceding claims, wherein the at least one ammonium polyphosphate is selected from the group consisting of ammonium meta phosphoric acid, -ortho phosphoric acid, ammonium salts of higher condensed phosphoric acids and mixtures thereof.

9. The fire protection element according to any of the preceding claims, wherein the at least one expandable graphite is selected from the group consisting of unmodified expandable graphite, interstitial compounds of water, sulfuric acid, nitric acid, acetic acid, lewis acids and/or other strong acids in graphite and mixtures thereof.

10. The fire protection element according to any of the preceding claims, wherein the at least one expandable graphite has a distribution of the particle size from about 10 to about 5000 µm.

11. The fire protection element according to any of the preceding claims, wherein further excipients are present, such as wetting agents, defoamer, preservatives, solvents, pigments, thickening agents, tixotrophic agents, cell regulators, cell stabilizers, catalysts, drying agents and/or foaming agents.

12. The fire protection element according to any of the preceding claims, wherein about 10 to about 98 weight % of the intumescent component (A) and about 2 to 99 weight % of the compound forming carrier (B) are present, with respect to the total weight or the fire protection element.

13. The fire protection element according to claim 12, wherein about 30 to about 65 weight % of the intumescent component (A) and about 35 to about 70 weight % of the compound forming carrier (B) are present, with respect to the total weight of the fire protection element.

14. The protection element according to any of claims 12 to 13, wherein about 0 to about 20 weight % excipients are present, with respect to the total weight of the fire protection element.

15. The fire protection element according to any of the preceding claims, wherein about 5 to about 90 weight % of the at least one derivate of cyanuric acid, about 5 to about 90 weight % of the at least one sugar polyol, about 5 to about 90 weight % of the at least one ammonium polyphosphate, about 5 to about 90 weight % of the at least one expandable graphite and about 5 to about 90 weight % of the aluminum hydroxide are present, with respect to the total weight of component (A).

16. The fire protection element according to claim 15, wherein about 5 to about 20 weight % of the at least one derivate of cyanuric acid, about 5 to about 20 weight % of the at least one sugar polyol, about 15 to about 45 weight % of the at least one ammonium polyphosphate, about 15 to about 45 weight % of the at least one expandable graphite and about 10 to about 25 weight % of the aluminum hydroxide are present, with respect to the total weight of component (A).

17. The fire protection element according to any of the proceeding claims, wherein about 0.025 to about 30 parts by weight of the at least one derivate of cyanuric acid, about 0.025 to about 40 weight % of the at least one sugar polyol, about 0.025 to about 35 weight % of the at least one ammonium polyphosphate, about 0.025 to about 50 weight % of the at least one expandable graphite, about 0.025 to about 30 weight % of the aluminum hydroxide and about 5 to 95 weight % of the compound forming carrier are present.

18. A fire protection component comprising a fire protection element according to claims 1 to 17, arranged with at least one surface layer.

19. The fire protection component according to claim 18, wherein the surface layer is made from a material that is selected from the group consisting of metals, mineral cotton, foam glass, calcium silicate, plaster, plaster composite materials, wood, wood composite materials, polyvinyl chloride, polyolefin, fiber glass-, plastic fiber-, metal fiber texture, wall papers, ceramic materials and mixtures thereof.

20. The fire protection component according to any of claims 18 or 19, wherein the component is built in a sandwich-type manner.

21. The fire protection component according to any of claims 18 to 20, wherein the at least one surface layer is arranged on the outside of the component and the core material is a fire protection element according to any of claims 1 to 17.

22. A method for the production of a fire protection element according to any of claims 1 to 17, comprising the steps of:
a) providing a source material of a compound forming carrier (B);
b) providing a intumescent component (A) of at least one derivate of cyanuric acid, at least one sugar polyol, at least one ammonium polyphosphate, at least one expandable graphite and aluminum hydroxide, alone or as a mixture;
c) homogeneously mixing the single constituents of component (A) separately and/or the mixture of the constituents of component (A) with the source material of the compound forming carrier (B);
d) producing a molded part from the homogeneous mixture obtained in step c).

## Revendications

1. Elément pare - feu composé de :
(A) un composant intumescent comportant:
(a) au moins un dérivé de l'acide cyanurique,
(b) au moins un polyole de sucre,
(c) au moins un polyphosphate d'ammonium,
(d) au moins un graphite exfolié et
(e) hydroxyde d'aluminium ; et
(B) un support formant un composite,
où le composant (A) est reparti de façon homogène dans le support formant un composite (B),
et où le support formant un composite (B) est sélectionné parmi le groupe composé de :
polyuréthannes, résines phénoliques, polystyrènes, polyoléfines, comme le polyéthylène et / ou le polybutylène, résines mélaminiques, mousses de résine mélaminique, caoutchouc synthétique ou naturel, cellulose, élastomères et des mélanges de ces composés,
et où l'élément de pare - feu existe sous la forme d'éléments de construction , de pièces de raccordement, de moules, de cylindres (bouchons), de plaques, de parallélépipèdes rectangles , de pyramides , de demi - coques , de corps creux , d'éléments de fermeture , de profilés d'étanchéité , et / ou de tuyaux d'isolation de tube,

2. Elément pare - feu selon la revendication 1, **caractérisé en ce que** le composant intumescent (A) est mélangé sous la forme d'une poudre avec le support formant un composite.

3. Elément pare - feu selon une des revendications précédentes, **caractérisé en ce que** le composant intumescent (A) est sans halogène ;

4. Elément pare - feu selon une des revendications précédentes, où le composant (A) est composé d'au moins un dérivé de l'acide cyanurique, au moins un polyole de sucre, au moins un polyphosphate d'ammonium, au moins un graphite exfolié et hydroxyde d'aluminium.

5. Elément pare - feu selon une des revendications précédentes, où le au moins un dérivé de l'acide cyanurique est sélectionné parmi le groupe composé de cyanamide, dicyanamide, dicyandlamide, guanidine, et de leurs sels, de biguanidine, de cyanurate de mélamine, de sels de l'acide cyanurique, des ester de l'acide cyanurique, des amides de l'acide cyanurique et des mélanges de ces composés, notamment l'amide de l'acide cyanurique (mélamine).

6. Elément pare - feu selon une des revendications précédentes, où le au moins un polyole de sucre est un alcool quadrivalent à octovalent.

7. Elément pare - feu selon la revendication 6, où le au moins un polyole de sucre est sélectionné parmi le groupe composé de thréite, érythrite, pentaérythrite, arabite, aldonite, xylite, sorbite, mannite, dulcite, formite et des mélanges de ces composés, notamment pentaérythrite.

8. Elément pare - feu selon une des revendications précédentes, où le au moins un polyphosphate d'ammonium est sélectionné parmi le groupe composé de l'acide mélaphosphorique d'ammonium, de l'acide orthophosphorique d'ammonium, des sels d'ammonium des acides phosphoriques condensés de façon plus forte et de mélanges de ce composés.

9. Elément pare - feu selon une des revendications précédentes, où le au moins un graphite exfolié est sélectionné parmi le groupe composé de : un graphite exfolié non modifié, composés interstitiel de l'eau, acide sulfurique, acide nitrique, acide acétique, acides de Lewis et / ou d'autres acides fortes dans le graphite et de mélanges de ces composés.

10. Elément pare - feu selon une des revendications précédentes, où le au moins un graphite exfolié présente une granulométrie entre environ 10 et environ 5000 µm.

11. Elément pare - feu selon une des revendications précédentes, où d'autres excipient sont présents comme des agents de humidification, des agents -anti- moussage ,des conservateurs , des solvants , des pigments colorés , des épaississeurs , des agents de thixotropage, des régulateurs de cellules, des stabilisateurs de cellules, des catalyseurs , des dessinants et / ou des propulseurs .

12. Elément pare - feu selon une des revendications précédentes, où environ 10 à environ 98 % en poids du composant intumescent (A) et environ 2 à 99 % en poids du support formant un composite (B) sont présents par rapport au poids total de l'élément pare - feu.

13. Elément pare - feu selon la revendication 12, où environ 30 à environ 65 % en poids du composant intumescent (A) et environ 35 à environ 70 % en poids du support formant un composite (B) sont présents par rapport au poids total de l'élément pare - feu.

14. Elément pare - feu selon une des revendications 12 à 13, où environ 0 à environ 20 % en poids d'excipients sont présents par rapport au poids total de l'élément pare - feu,

15. Elément pare - feu selon une des revendications précédentes, où environ 5 à environ 90 % en poids du au moins un dérivé de l'acide cyanurique, environ 5 à environ 90 % en poids du au moins un polyole de sucre, environ 5 à environ 90 % en poids du au moins un polyphosphate d'ammonium, environ 5 à environ 90 % en poids du au moins graphite exfolié et environ 5 à environ 90 % en poids du au moins un hydroxyde d'aluminium , sont présents par rapport au poids total du composant (A).

16. Elément pare - feu selon la revendication 15, où environ 5 à environ 20 % en poids du au moins un dérivé de l'acide cyanurique, environ 5 à environ 20 % en poids du au moins un polyole de sucre, environ 15 à environ 45 % en poids du au moins un polyphosphate d'ammonium, environ 15 à environ 45 % en poids du au moins graphite exfolié et environ 1 à environ 2 % en poids du au moins un hydroxyde d'aluminium , sont présents par rapport au poids total du composant (A).

17. Elément pare - feu selon une des revendications précédentes, où environ 0,025 à environ 30 parts en poids du au moins un dérivé de l'acide cyanurique, environ 0,025 à environ 40 % en poids du au moins un polyole de sucre, environ 0,025 à environ 35 % en poids du au moins un polyphosphate d'ammonium, environ 0,025 à environ 50 % en poids du au moins graphite exfolié et environ 0,025 à environ 30 % en poids du au moins un hydroxyde d'aluminium et environ 5 à environ 95 % en poids du support formant un composite sont présents .

18. Elément de construction ignifuge, comprenant un élément pare - feu selon une des revendications 1 à 17, avec au moins une couche de recouvrement disposé sur ledit élément.

19. Elément de construction ignifuge selon la revendication 18, où la couche de recouvrement est réalisée à partir d'un matériau , sélectionné parmi le groupe composé de métaux , de laine minérale , de verre - mousse , de silicate de calcium , du gypse , de matériaux de composite de gypse , du bois , de matériaux de composite de bois , de polychlorure de vinyle, de polyoléfine, de tissus de fibres de verre, de tissus de fibres en matière plastique, de tissus de fibres métalliques, de tapis, de matières céramiques et des mélanges de ces matières.

20. Elément de construction ignifuge selon une des revendications 18 ou 19, où l'élément de construction est construit en forme de sandwich.

21. Elément de construction ignifuge selon une des revendications 18 à 20, où la au moins une couche de recouvrement est disposée sur l'extérieur de l'élément de construction et le matériau de noyau est un élément pare - feu selon une des revendications 1 à 17.

22. Procédé pour fabriquer un élément pare - feu selon une des revendications 1 à 17, les étapes comportant :
a) mise à disposition d'un matériau de départ d'un support formant un composite (B),
b) mise à disposition d'un composant intumescent (A) d'au moins un dérivé de l'acide cyanurique, au moins un polyole de sucre, au moins un polyphosphate d'ammonium, au moins un graphite exfolié et hydroxyde d'aluminium; de façon individueile ou comme mélange;
c) brassage homogène des composants individuels du composant (A) de façon séparée et / ou du mélange composé des composants individuels du composant (A) et du matériau de départ du support formant un composite (B);
d) fabrication d'une pièce moulée à partir di mélange homogène, obtenu à l'étape c),
